# EUROPÄISCHE PATENTANMELDUNG

(11) **EP 2 662 157 A2**
(43) Veröffentlichungstag der Anmeldung: **13.11.2013**
(21) Anmeldenummer: 13163249.9
(22) Anmeldetag: 11.04.2013
(51) Int. Cl.: B08B 9/093, B08B 3/02, B05B 15/06

(54) **Behälter-Innenreiniger für Behälter mit Zugang von unten**

(30) Priorität: 11.05.2012 CH 6692012
(71) Anmelder: Peter Moog Und Cie AG, 3076 Worb (CH)
(72) Erfinder: Decker, Riccardo, 4564 Obergerlafingen (CH); Thüler, Adrian, 3507 Biglen (CH)
(74) Vertreter: BOVARD AG

(57) **Zusammenfassung**

Die Erfindung betrifft eine Vorrichtung (BIR1) zur Reinigung innenliegender Flächen von Behältern, insbesondere von Fässern oder Tanks mit unten angebrachter Zugangsöffnung, mittels eines in Form mindestens eines Fluidstrahls auf die innenliegenden Flächen auftreffenden Fluids. Die Vorrichtung besitzt eine Basis zum stabilen Aufstellen der Vorrichtung im Innern des Behälters und eine an der Basis befestigte mehrteilige Fluidpfad-Anordnung, welche bezüglich der Basis verstellbar ist und einen Fluidpfad aufweist, welcher sich von einem Fluideinlass (FE) der Vorrichtung zu einem als Düsenbereich ausgebildeten Fluidauslass (FA) der Vorrichtung erstreckt. An den Fluideinlass (FE) kann eine Fluiddruck, d.h. potentielle Energie, und Fluiddurchsatz, d.h. kinetische Energie, bereitstellende Fluidquelle angeschlossen werden. Die Fluidpfad-Anordnung kann von einem eingefahrenen Zustand, in welchem sich der Fluidauslass in einer unteren Stellung nahe bei der Basis befindet, zu einem ausgefahrenen Zustand, in welchem sich der Fluidauslass in einer oberen Stellung weiter entfernt von der Basis befindet, durch Ausfahren bzw. Einfahren verstellt werden.

## Beschreibung

Die Erfindung bezieht sich auf eine Vorrichtung zur Reinigung innenliegender Flächen von Behältern, insbesondere von Fässern oder Tanks mit unten angebrachter Zugangsöffnung, mittels eines in Form mindestens eines Fluidstrahls auf die innenliegenden Flächen auftreffenden Fluids.

Derartige Behälter-Innenreiniger sind z.B. aus der US 8 122 898, aus der US 3 645 452, aus der DE 10 2010 010 419 oder aus der DE 79 12 668 U1 bekannt. Bei ihnen werden mittels eines in Form mindestens eines Fluidstrahls auf die innenliegenden Flächen auftreffenden Fluids die Innenflächen des Behälters gereinigt. Typischerweise wird als Fluid Wasser ggfs. mit Zusätzen wie Tensiden oder dgl. verwendet. Bei der Reinigung von Weinfässern aus Holz verwendet man aber bevorzugt geschmacksneutrales Wasser ohne Zusätze. Solche Vorrichtungen enthalten in der Regel eine Druckleitung, welche sich von einem Wassereinlass der Vorrichtung durch die Vorrichtung hindurch zu einem mindestens ein Düsenloch aufweisenden Düsenbereich der Vorrichtung erstreckt. Dadurch kann aus dem Düsenbereich austretendes Wasser im Innern des zu reinigenden Behälters an dessen Innenwände gestrahlt werden, wodurch an den Innenwänden haftende Verunreinigungen mechanisch weggerissen und/oder nach und nach aufgelöst bzw. von den Innenwänden abgelöst werden. Das von den Innenwänden abprallende, herabtropfende oder an ihnen herunterfliessende Wasser führt diese Verunreinigungen mit sich und sammelt sich schliesslich an der tiefsten Stelle des Behälters. Von dort tritt das Wasser samt der Verunreinigungen über einen am tiefsten Punkt des Behälters angeordneten Ablauf aus oder wird von dort abgesaugt. Auf diese Weise werden die Behälter-Innenwände nach und nach immer sauberer.

Der Erfindung liegt die Aufgabe zugrunde, das Reinigen von Fässern oder Tanks, insbesondere mit unten angebrachter Zugangsöffnung, zu vereinfachen und zu verbessern.

Zur Lösung der Aufgabe wird eine solche als "Behälter-Innenreiniger" bezeichnete Vorrichtung bereitgestellt. Die Vorrichtung besitzt eine Basis zum stabilen Aufstellen der Vorrichtung im Innern des Behälters und eine an der Basis befestigte mehrteilige Fluidpfad-Anordnung, welche bezüglich der Basis verstellbar ist und einen Fluidpfad aufweist. Der Fluidpfad erstreckt sich von einem Fluideinlass der Vorrichtung zu einem als Düsenbereich ausgebildeten Fluidauslass der Vorrichtung. Der Fluideinlass ist so ausgelegt, dass an ihn eine Fluiddruck, d.h. potentielle Energie, und Fluiddurchsatz, d.h. kinetische Energie, bereitstellende Fluidquelle angeschlossen werden kann. Erfindungsgemäss ist die Fluidpfad-Anordnung von einem eingefahrenen Zustand, in welchem sich der Fluidauslass in einer unteren Stellung nahe bei der Basis befindet, zu einem ausgefahrenen Zustand, in welchem sich der Fluidauslass in einer oberen Stellung weiter entfernt von der Basis befindet, durch Ausfahren bzw. Einfahren verstellbar.

Dies ermöglicht das Einbringen des Behälter-Innenreinigers bei eingefahrener Fluidpfad-Anordnung ins Innere des Behälters z.B. über eine unten am Behälter angebrachte Zugangsöffnung (Mannloch). Nach dem Einbringen des Behälter-Innenreinigers steht dieser stabil am Boden des Behälters. Nun kann die Fluidpfad-Anordnung auf eine für die Reinigung eines jeweiligen Behälters optimale Höhe ausgefahren werden, wobei aus dem Düsenbereich austretendes Wasser an die zu reinigenden Behälter-Innenwände gestrahlt wird. Dies ermöglicht ein effizientes rationales Reinigen. Nach dem Reinigen des Behälters wird die Fluidpfad-Anordnung wieder eingefahren und aus dem Behälter entnommen.

In den Unteransprüchen sind vorteilhafte Ausführungen der Erfindung beschrieben.

Weitere Vorteile, Merkmale und Anwendungsmöglichkeiten der Erfindung ergeben sich aus der nun folgenden Beschreibung anhand der Zeichnung, wobei
Fig. 1 eine Perspektivansicht eines ersten Ausführungsbeispiels der erfindungsgemässen Vorrichtung im eingeschwenkten Zustand zeigt;
Fig. 2 eine Perspektivansicht des ersten Ausführungsbeispiels der erfindungsgemässen Vorrichtung in einem teilweise ausgeschwenkten Zustand zeigt;
Fig. 3 eine Seitenansicht des ersten Ausführungsbeispiels der erfindungsgemässen Vorrichtung im eingefahrenen und eingeschwenkten Zustand, in drei jeweils eingefahrenen und unterschiedlich ausgeschwenkten Zuständen sowie im ausgefahrenen und vollständig ausgeschwenkten Zustand zeigt;
Fig. 4 eine der Fig. 1 entsprechende Draufsicht des ersten Ausführungsbeispiels der erfindungsgemässen Vorrichtung im eingefahrenen und eingeschwenkten Zustand zeigt;
Fig. 5 eine der Fig. 3 entsprechende Seitenansicht des ersten Ausführungsbeispiels der erfindungsgemässen Vorrichtung im eingefahrenen und eingeschwenkten Zustand zeigt, wobei ein Teil der Vorrichtung im Längsschnitt gemäss der Schnittebene X-X von Fig. 4 dargestellt ist;
Fig. 6 eine Perspektivansicht einer Baugruppe des ersten Ausführungsbeispiels der erfindungsgemässen Vorrichtung im eingefahrenen Zustand und im ausgefahrenen Zustand zeigt;
Fig. 7 eine Seitenansicht der Baugruppe des ersten Ausführungsbeispiels der erfindungsgemässen Vorrichtung im eingefahrenen Zustand zeigt, wobei ein Teilbereich der Vorrichtung als Längsschnittansicht dargestellt ist;
Fig. 8 eine vergrösserte Darstellung des als Längsschnitt dargestellten Teilbereichs von Fig. 7 im eingefahrenen Zustand der Vorrichtung ist;
Fig. 9 eine stärker vergrösserte Darstellung eines Ausschnitts des Teilbereichs von Fig. 8 im quasi ausgefahrenen Zustand der Vorrichtung ist;
Fig. 10 eine noch stärker vergrösserte Darstellung eines Ausschnitts des Teilbereichs von Fig. 8 im quasi ausgefahrenen Zustand der Vorrichtung ist;
Fig. 11 eine der Fig. 10 entsprechende noch stärker vergrösserte Darstellung eines Ausschnitts des Teilbereichs von Fig. 8 in einem vollständig ausgefahrenen Zustand der Vorrichtung ist;
Fig. 12 eine Perspektivansicht eines zweiten Ausführungsbeispiels der erfindungsgemässen Vorrichtung im eingefahrenen Zustand zeigt;
Fig. 13 eine Perspektivansicht des zweiten Ausführungsbeispiels der erfindungsgemässen Vorrichtung im ausgefahrenen Zustand zeigt;
Fig. 14 eine Seitenansicht des zweiten Ausführungsbeispiels der erfindungsgemässen Vorrichtung im eingefahrenen Zustand zeigt; und
Fig. 15 eine Seitenansicht des zweiten Ausführungsbeispiels der erfindungsgemässen Vorrichtung im ausgefahrenen Zustand zeigt.

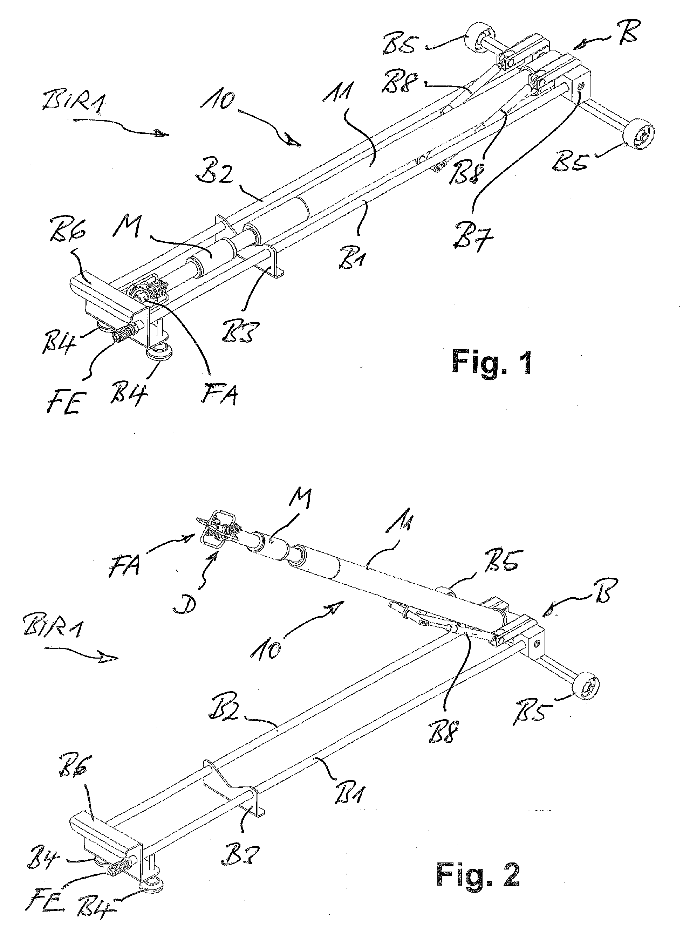

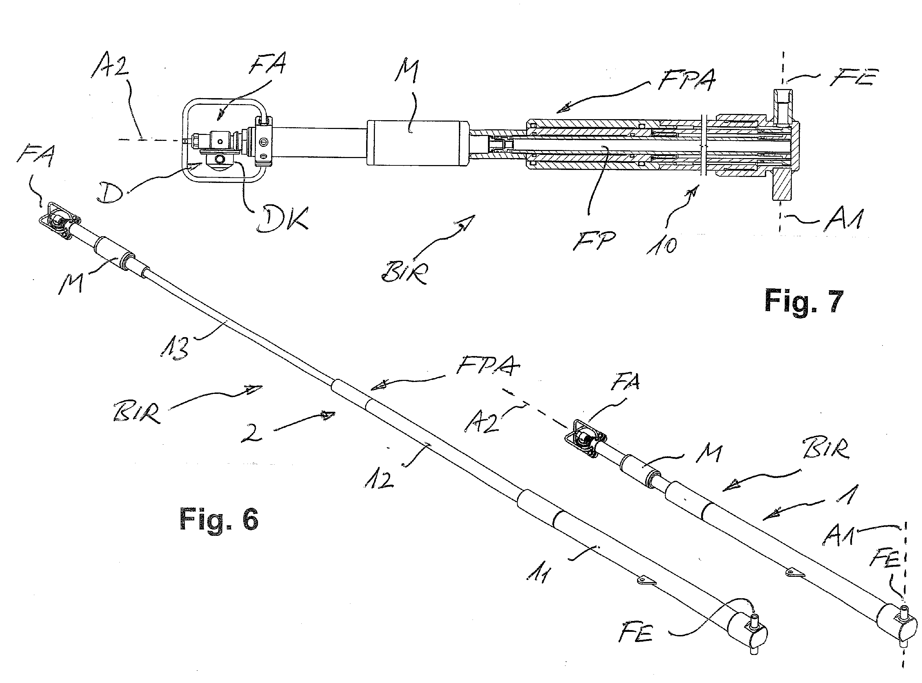

In **Fig. 1** ist als Perspektivansicht ein erstes Ausführungsbeispiel der erfindungsgemässen Vorrichtung BIR1 im eingefahrenen und eingeschwenkten Zustand gezeigt, während in **Fig. 2** in derselben Perspektivansicht die Vorrichtung BIR in einem teilweise ausgeschwenkten Zustand gezeigt ist. Die Vorrichtung BIR1 hat eine Basis B, an der ein Teleskoprohr 10 angelenkt ist. Das Teleskoprohr 10 enthält drei Rohre 11, 12, 13 (siehe Fig. 6), wovon im eingefahrenen Zustand in Fig. 1 nur das äussere Rohr 11 sichtbar ist.

Die Basis B enthält ein erstes Halterohr B1, durch welches Reinigungsfluid (z.B. Wasser) geführt werden kann, sowie ein zweites Halterohr B2. Die beiden nebeneinander, insbesondere parallel zueinander, angeordneten Halterohre B1 und B2 sind über eine Verstrebung B3 miteinander verbunden. Die Verstrebung B3 dient auch als Auflage für das eingeschwenkte Teleskoprohr 10. Die Basis B enthält ausserdem zwei Stellfüsse B4 im Bereich der ersten Enden der Halterohre B1 und B2 sowie zwei Rollen B5 im Bereich der zweiten Enden der Halterohre B1 und B2. Im Bereich der ersten Enden der Halterohre B1 und B2 besitzt die Basis B einen Haltegriff B6. Im Bereich der zweiten Enden der Halterohre B1 und B2 besitzt die Basis B eine Scharnieranordnung B7 mit integriertem Kugelhahn als Sicherheitsventil. Zwischen der Basis B und dem bezüglich der Basis B verschwenkbaren Teleskoprohr 10 sind zwei Gasfedern B8 parallel zueinander angeordnet. Die Gasfedern B8 sind mit ihrem ersten Ende an dem äusseren Rohr 11 des Teleskoprohrs 10 angelenkt und mit ihrem zweiten Ende im Bereich der Scharnieranordnung B7 an der Basis B angelenkt. Die Gasfedern B8 sind in der vollständig eingeschwenkten (horizontalen) Stellung des Teleskoprohrs 10 und in der vollständig ausgeschwenkten (vertikalen) Stellung des Teleskoprohrs 10 jeweils in einem stabilen Zustand mit relativ niedriger potentieller Energie (geringer Gasdruck), während sie in einer teilweise ausgeschwenkten Stellung bzw. Zwischenstellung des Teleskoprohrs 10 in einem labilen Zustand mit relativ hoher potentieller Energie (hoher Gasdruck) sind.

Das Halterohr B1, die Scharniervorrichtung B7 mit integriertem Ventil und das Teleskoprohr 10 bilden einen Fluidpfad FP (siehe Fig. 7) zwischen einem Fluideinlass FE am ersten Ende des Halterohrs B1 und einem Fluidauslass FA am äusseren Ende des Teleskoprohrs 10. Der Fluidpfad FP enthält im Bereich seines äusseren Endes vor dem Fluidauslass FA einen Wassermotor M, mit dem ein im Bereich des Fluidauslasses FA angeordneter Düsenkopf DK (siehe Fig. 7) drehangetrieben werden kann. Wenn an den Fluideinlass FE eine Fluiddruck, d.h. potentielle Energie, und Fluiddurchsatz, d.h. kinetische Energie, bereitstellende Fluidquelle (nicht gezeigt) angeschlossen wird, lässt sich das vollständig ausgeschwenkte (vertikale) Teleskoprohr 10 aus seiner vollständig eingefahrenen Stellung in seine vollständig ausgefahrene Stellung ausfahren und der Wassermotor M aktivieren, so dass der Düsenkopf DK in Drehung versetzt wird und durch seine Düsen Reinigungsfluid (z.B. Reinigungswasser) unter Hochdruck austritt. Die dabei verwendeten Drücke liegen im Bereich von 10 bis 200 bar.

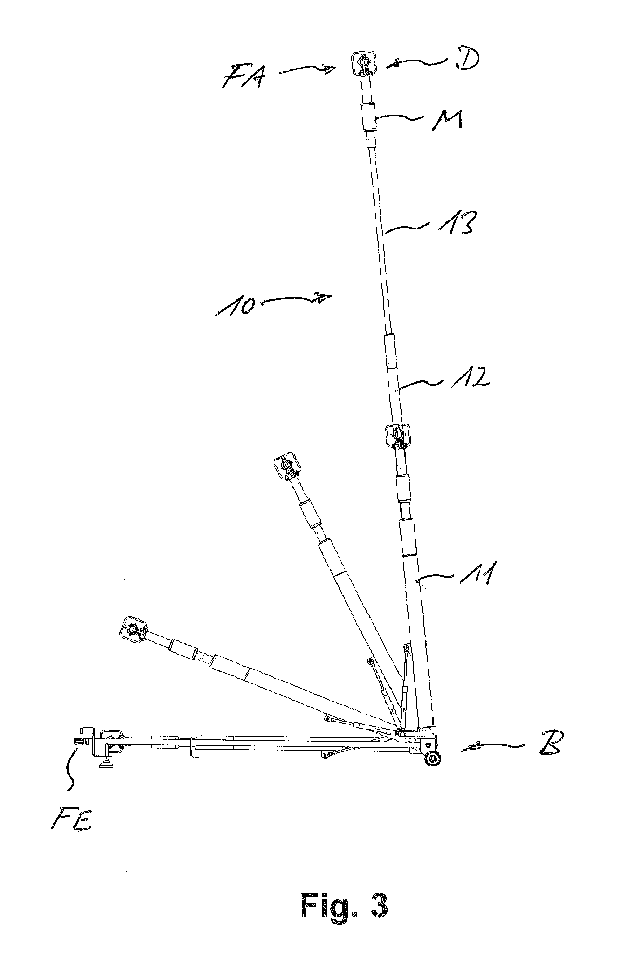

In **Fig. 3** ist eine Seitenansicht des ersten Ausführungsbeispiels der erfindungsgemässen Vorrichtung BIR1 im eingefahrenen und eingeschwenkten Zustand, in drei jeweils eingefahrenen und unterschiedlich ausgeschwenkten Zuständen (Zwischenzuständen) sowie im ausgefahrenen und vollständig ausgeschwenkten Zustand gezeigt. Die Vorrichtung BIR1 wird mit vollständig eingeschwenktem (horizontalen) und eingefahrenem Teleskoprohr 10 durch eine Behälteröffnung in den zu reinigenden Behälter geschoben. Dann wird das Teleskoprohr 10 unter Überwindung eines Widerstandes (Druckpunkt) der Gasfedern B8 in den vollständig ausgeschwenkten (vertikalen) Zustand verschwenkt. Dabei wird die an den Fluideinlass FE angeschlossene Fluidquelle durch das Ventil in der Scharnieranordnung B7 wirksam. Durch die potentielle und kinetische Energie des Fluids (Druck bzw. Strömung) wird einerseits das Teleskoprohr 10 ausgefahren und andererseits der Wassermotor M aktiviert, wodurch der Düsenkopf DK in Drehung versetzt wird und Reinigungsfluid durch die Düsen des Düsenkopfes DK mit hoher Geschwindigkeit austritt.

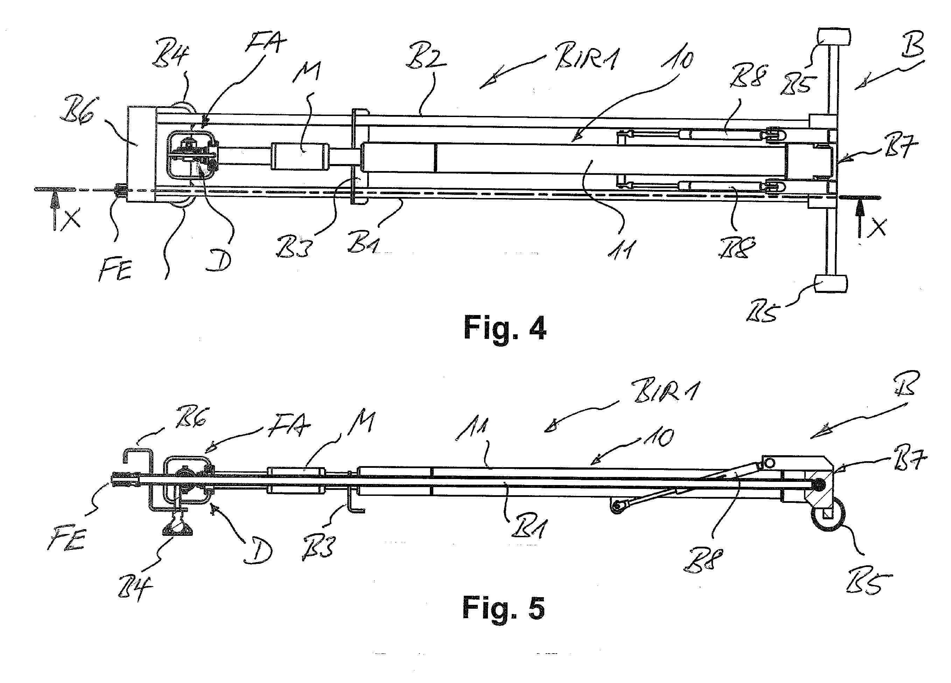

In **Fig. 4** ist eine der Fig. 1 entsprechende Draufsicht des ersten Ausführungsbeispiels der erfindungsgemässen Vorrichtung BIR1 im eingefahrenen und eingeschwenkten Zustand gezeigt, während in Fig. 5 eine der Fig. 3 entsprechende Seitenansicht des ersten Ausführungsbeispiels der erfindungsgemässen Vorrichtung BIR1 im eingefahrenen und eingeschwenkten Zustand gezeigt ist, wobei das wasserführende Halterohr B1 der Vorrichtung im Längsschnitt gemäss der Schnittebene X-X von Fig. 4 dargestellt ist.

In **Fig. 6** ist eine Perspektivansicht einer Baugruppe des ersten Ausführungsbeispiels der erfindungsgemässen Vorrichtung BIR1 im eingefahrenen Zustand 1 und im ausgefahrenen Zustand 2 gezeigt. Die Vorrichtung BIR1 hat eine Basis B (siehe Fig. 1 bis 5) zum stabilen Aufstellen der Vorrichtung BIR1 im Innern des Behälters und eine an der Basis B befestigte mehrteilige Fluidpfad-Anordnung FPA. Die Fluidpfad-Anordnung FPA enthält ein Teleskoprohr 10, welches ein mit der Basis B verbundenes erstes Rohr 11, ein zweites Rohr 12 und ein drittes Rohr 13 aufweist, an dessen von der Basis B fernen Ende ein Wassermotor M angeschlossen ist. Die Fluidpfad-Anordnung FPA ist bezüglich der Basis B verstellbar und enthält einen Fluidpfad FP, der sich von einem Fluideinlass FE der Vorrichtung zu einem einen Düsenbereich D in Form eines Düsenkopfes DK (siehe Fig. 7) aufweisenden Fluidauslass FA der Vorrichtung erstreckt. An den Fluideinlass FE kann die Fluidquelle (nicht gezeigt) angeschlossen werden, welche Fluiddruck, d.h. potentielle Energie, und Fluiddurchsatz, d.h. kinetische Energie, bereitstellt. Als Fluidquelle kann ein Kompressor dienen, der vom Wassernetz stammendes und ggfs. in einem Speicherbehälter (nicht gezeigt) zwischengespeichertes und mit Zusätzen wie Tensiden oder dgl. versehenes Wasser komprimiert und der Vorrichtung BIR1 zuführt.

Die Fluidpfad-Anordnung FPA kann von einem eingefahrenen Zustand 1, in welchem sich der Fluidauslass FA in einer unteren Stellung nahe bei der Basis B befindet, zu einem ausgefahrenen Zustand 2, in welchem sich der Fluidauslass FA in einer oberen Stellung weiter entfernt von der Basis B befindet, ausgefahren werden, und sie kann von dem ausgefahrenen Zustand 2 zu dem eingefahrenen Zustand 1 eingefahren werden.

Ausserdem kann die Fluidpfad-Anordnung FPA um eine sich durch den Fluideinlass FE erstreckende, typischerweise in horizontaler Richtung verlaufende Achse A1 bezüglich der Basis B verschwenkt werden. Dabei befindet sich die Fluidpfad-Anordnung FPA oberhalb der Basis B, und die Schwenkachse A1 verläuft im wesentlichen horizontal. Die Basis B hat eine ausreichend grosse Masse im Vergleich zur Fluidpfad-Anordnung FPA, so dass die Vorrichtung BIR1 stabil stehen kann und durch Wasserstrahl-Reaktionskräfte und/oder durch Kippmomente aufgrund der Masse der Fluidpfad-Anordnung FPA nicht ins Kippen gerät.

In **Fig. 7** ist eine Seitenansicht des ersten Ausführungsbeispiels der erfindungsgemässen Vorrichtung BIR1 im eingefahrenen Zustand 1 gezeigt, wobei der als Teleskoprohr 10 ausgebildete Teilbereich der Vorrichtung BIR1 in Form einer Längsschnittansicht dargestellt ist. Der durch die Fluidpfad-Anordnung FPA gebildete Fluidpfad FP verläuft von dem Fluideinlass FE durch das Teleskoprohr 10 sowie durch den Wassermotor M hindurch zu dem Fluidauslass FA, der den Düsenbereich D in Form eines Düsenkopfes DK enthält.

In einer typischen Anwendung der Vorrichtung BIR1 zur Reinigung der innenliegenden Flächen eines Behälters (Fass oder Tank) mit unten angebrachter Zugangsöffnung wird die an der Basis B angelenkte Fluidpfad-Anordnung FPA in dem eingefahrenem Zustand 1 sowie in einer im wesentlichen horizontalen Schwenkstellung durch die Zugangsöffnung ins Innere des Behälters geschoben. Anschliessend wird die Fluidpfad-Anordnung FPA um die horizontale Achse A1 in eine vertikale Schwenkstellung verschwenkt und in dieser vertikalen Schwenkstellung bezüglich der Basis B durch (nicht gezeigte Mittel) fixiert.

Wenn nun an den Fluideinlass FE eine Fluiddruck und Fluiddurchsatz bereitstellende Fluidquelle angeschlossen wird bzw. ein Ventil in einer Fluidleitung zu einer solchen Fluidquelle geöffnet wird, bewirkt das in den Fluidpfad FP eintretende und diesen durchströmende Fluid (z.B. Hochdruck-Reinigungswasser) einerseits ein Ausfahren des Teleskoprohres 10 und somit ein Ausfahren der Fluidpfad-Anordnung FPA von dem in Fig. 6 und in Fig. 7 dargestellten eingefahrenen Zustand 1 zu dem in Fig. 6 dargestellten ausgefahrenen Zustand 2 sowie andererseits ein Drehen des Düsenkopfes DK um eine Achse A2 und ggfs. um weitere (nicht gezeigte) Drehachsen eines mehrachsig gelagerten Düsenkopfes. Dadurch wird der mindestens eine aus dem Düsenkopf DK austretende Fluidstrahl oder ein Fächer aus einer Vielzahl aus dem Düsenkopf DK austretender Fluidstrahlen derart bewegt, dass der eine oder die mehreren Fluidstrahlen den Fluidauslass FA in einem grossen Raumwinkel-Bereich, d.h. in praktisch allen Raumrichtungen, verlassen und somit auf gesamte Fläche der Behälter-Innenwand auftreffen.

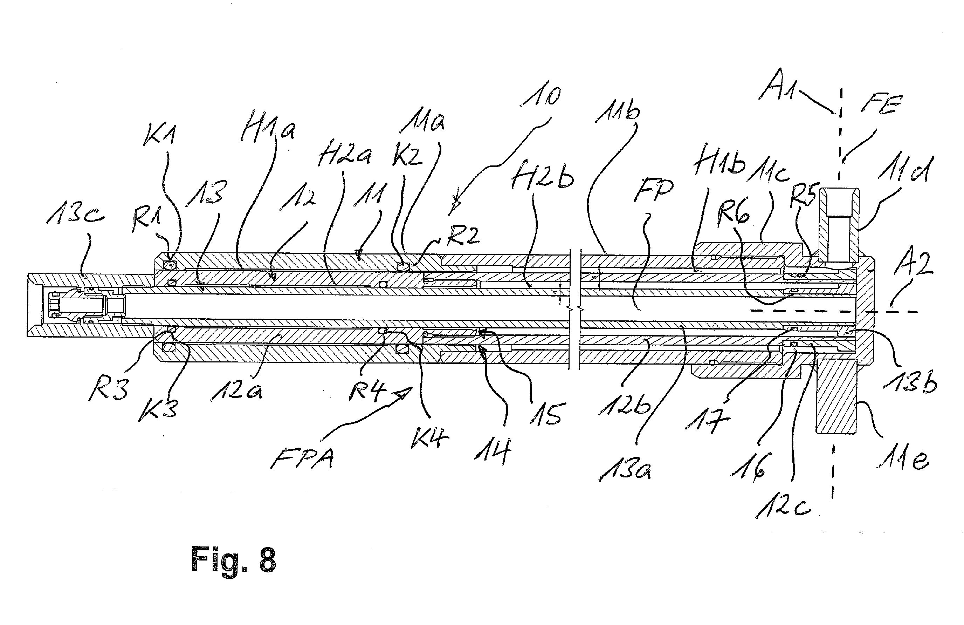

Wenn dann die Fluidquelle von dem Fluideinlass FE entfernt wird bzw. das Ventil in der Fluidleitung zu der Fluidquelle geschlossen wird, bewirkt die auf Teile des Teleskoprohres 10 sowie auf das Fluid wirkende Schwerkraft ein Einfahren des Teleskoprohres 10, wobei das Fluid aus dem Fluidpfad FP über spezielle Lecköffnungen 14, 15 (siehe Fig. 8) austritt, die einen erhöhten Fluidwiderstand bilden. Dadurch erfolgt ein relativ langsames Ausströmen des Fluids und somit ein fluidgebremstes Einfahren der Fluidpfad-Anordnung FPA von dem in Fig. 6 dargestellten ausgefahrenen Zustand 2 zu dem in Fig. 6 und in Fig. 7 dargestellten eingefahrenen Zustand 1.

In **Fig. 8** ist eine vergrösserte Darstellung des als Längsschnitt dargestellten Teilbereichs von Fig. 7 im eingefahrenen Zustand 1 (siehe Fig. 6 und Fig. 7) der Vorrichtung gezeigt. Man erkennt einen sich von dem Fluideinlass FE und durch das Teleskoprohr 10 erstreckenden Teilabschnitt des Fluidpfades FP der Fluidpfad-Anordnung FPA. Das Teleskoprohr 10 enthält ein erstes Rohr 11, ein zweites Rohr 12 und ein drittes Rohr 13. Das erste Rohr 11 bildet den äussersten Teil des Teleskoprohrs. Das zweite Rohr 12 bildet einen mittleren Teil des Teleskoprohrs, der im Innern des ersten Rohres 11 entlang der Achse A2 axial verschiebbar ist. Das dritte Rohr 13 bildet den innersten Teil des Teleskoprohrs, der ebenfalls im Innern des zweiten Rohres 12 entlang der Achse A2 axial verschiebbar ist. Die Rohre 11, 12 und 13 sind z.B. aus rostfreiem Stahl (Edelstahl) gefertigt.

Das erste Rohr 11 weist mehrere Abschnitte 11a, 11b, 11c, 11d und 11e auf, die miteinander, z.B. durch Verschweissung oder Verschraubung, verbunden sind. Der Abschnitt 11a ist der von der Basis B weiter entfernte Abschnitt des Rohres 11. Der Abschnitt 11b ist der von der Basis B weniger weit entfernte Abschnitt des Rohres 11 und ist mit dem Abschnitt 11a abdichtend und starr verbunden. Der Abschnitt 11c ist ein basisseitiger Abschnitt des Rohres und bildet eine Art Fassung, in die der Abschnitt 11b eingesetzt und mit dieser abdichtend und starr verbunden ist. Mit dem Abschnitt 11c sind zwei weitere Abschnitte 11d und 11e starr verbunden. Der Abschnitt 11d ist ein rohrförmiger Abschnitt, der den zu dem Fluidpfad FP führenden Fluideinlass FE bildet. Der Abschnitt 11e ist ein zylinderförmiger Stutzen, der bezüglich der Längsachse A2 des Teleskoprohres 10 diametral gegenüberliegend zu dem Abschnitt 11e angeordnet ist, so dass die beiden Abschnitte 11d und 11e jeweils einen Lagerzapfen bilden und ein Verschwenken des Teleskoprohres 10 bezüglich der Basis B um die Schwenkachse A1 ermöglichen. Die Schwenkachse A1 verläuft senkrecht zur Längsachse A2 des Teleskoprohres.

Das zweite Rohr 12 weist drei Abschnitte 12a, 12b und 12c auf, die ebenfalls miteinander, z.B. durch Verschweissung oder Verschraubung, verbunden sind. Der Abschnitt 12a ist der von der Basis B weiter entfernte Abschnitt des Rohres 12. Der Abschnitt 12b ist der von der Basis B weniger weit entfernte Abschnitt des Rohres 12 und ist mit dem Abschnitt 12a abdichtend und starr verbunden. Der Abschnitt 12c ist der am nächsten bei der Basis B angeordnete Abschnitt des Rohres 12 und ist mit dem Abschnitt 12b an dessen der Basis B zugewandtem Ende abdichtend und starr verbunden.

Auch das dritte Rohr 13 weist drei Abschnitte 13a, 13b und 13c auf, die ebenfalls miteinander, z.B. durch Verschweissung oder Verschraubung, verbunden sind. Der Abschnitt 13a ist der von der Basis B weiter entfernte Abschnitt des Rohres 13. Der Abschnitt 13b ist der von der Basis B weniger weit entfernte Abschnitt des Rohres 13 und ist mit dem Abschnitt 13a an dessen basisseitigem Ende abdichtend und starr verbunden. Der Abschnitt 13c ist der von der Basis B am weitesten entfernte Abschnitt des Rohres 13 und ist mit dem Abschnitt 13a an dessen von der Basis B abgewandtem Ende abdichtend und starr verbunden. An diesem Abschnitt 13c wird der Wassermotor M (siehe Fig. 6 und Fig. 7) angebracht.

Es wird nun anhand von **Fig. 8** der durch das erste Rohr 11 und das zweite Rohr 12 gebildete Aufbau beschrieben.

An der Innenwand des ersten Abschnitts 11a des ersten Rohres 11 sind zwei voneinander axial beabstandete Ringnuten R1 und R2 ausgebildet, die sich jeweils entlang der Umfangsrichtung des Rohres 11 erstrecken. In der Ringnut R1 ist ein Abstandshalter K1 angeordnet, während in der Ringnut R2 ein Abstandshalter K2 angeordnet ist. Die Abstandshalter K1 und K2 bilden jeweils einen Anschlag für die Aussenwand des zweiten Rohres 12, das im Innern des ersten Rohres 11 axial verschiebbar und ggfs. mit radialem Spiel angeordnet ist. Wesentlich ist, dass die Abstandshalter K1 und K2 zwischen den beiden Rohren 11 und 12 nicht abdichtend sind, d.h. das Fluid kann in axialer Richtung an den Abstandshaltern K1 und K2 vorbeiströmen. Die Abstandshalter K1 und K2 stellen somit für eine zwischen den Rohren 11 und 12 axial verlaufende Strömung lediglich eine Verengung, jedoch keine Abdichtung dar. Vorzugsweise sind die Abstandshalter K1 und K2 jeweils ein ringförmiges Gebilde, wie z.B. ein ringförmiger Kugelkäfig oder ein O-Ring aus einem Elastomermaterial. Der O-Ring kann einen kreisförmigen oder nichtkreisförmigen Querschnitt quer zur Umfangsrichtung des Rohres 11 haben. Insbesondere kann der O-Ring auch einen entlang der Umfangsrichtung des Rohres 11 veränderlichen Querschnitt mit vorzugsweise abwechselnd grösserer und kleinerer Querschnittsfläche haben. Dies ermöglicht eine Lagerung des Rohres 12 mit oder ohne radialem Spiel im Innern des Rohres 11 und insbesondere mit radialer Federung, wenn ein elastisch verformbarer Abstandshalter K1 oder K2 verwendet wird.

An der Aussenwand des dritten Abschnitts 12c des zweiten Rohres 12 ist eine äussere Ringnut R5 ausgebildet, die sich jeweils entlang der Umfangsrichtung des Rohres 12 erstreckt. In der Ringnut R5 ist ein Dichtungsring 16 angeordnet. Wenn das zweite Rohr 12 in dem ersten Rohr 11 des Teleskoprohres 10 eingefahren ist, besteht zwischen dem Dichtungsring 16 und der Innenwand des ersten Rohres 11 ein radiales Spiel. Der Dichtungsring 16 bildet hier keine Abdichtung für ein zwischen den Rohren 11 und 12 axial strömendes Fluid.

Durch diesen Aufbau der Rohre 11 und 12 ist zwischen den beiden Rohren 11 und 12 ein sich über die ganze axiale Länge der beiden Rohre 11 und 12 erstreckender Ringspalt gebildet, welcher einen Hohlraum H1 bildet, der durch einen Leckbereich 14 in zwei axiale Hohlraum-Teilabschnitte H1a und H1b unterteilt ist. Der Leckbereich 14 ist insbesondere ein ringförmiger Leckbereich zwischen den beiden Rohren 11 und 12 und kann durch den ersten Dichtungsring 16 abgedichtet werden. Um diese Abdichtung zu erzielen, muss das Rohr 12 bezüglich des Rohrs 11 ausreichend weit und mit ausreichender Kraft axial verschoben werden, damit der Dichtungsring 16 in den Leckbereich 14 gelangt und diesen unter elastischer Verformung des Dichtungsrings 16 verschliesst. In diesem abgedichteten Zustand ist eine axiale Strömung eines Fluids von dem ersten Hohlraum-Teilabschnitt H1a zu dem zweiten Hohlraum-Teilabschnitt H1b oder umgekehrt nicht mehr möglich.

Es wird nun weiter anhand von **Fig. 8** der durch das zweite Rohr 12 und das dritte Rohr 13 gebildete Aufbau beschrieben.

In ähnlicher Weise wie weiter oben beschrieben sind an der Innenwand des ersten Abschnitts 12a des zweiten Rohres 12 zwei voneinander axial beabstandete Ringnuten R3 und R4 ausgebildet, die sich jeweils entlang der Umfangsrichtung des Rohres 12 erstrecken. In der Ringnut R3 ist ein Abstandshalter K3 angeordnet, während in der Ringnut R4 ein Abstandshalter K4 angeordnet ist. Die Abstandshalter K3 und K4 bilden jeweils einen Anschlag für die Aussenwand des dritten Rohres 13, das im Innern des zweiten Rohres 12 axial verschiebbar und ggfs. mit radialem Spiel angeordnet ist. Wesentlich ist auch hier, dass die Abstandshalter K3 und K4 zwischen den beiden Rohren 12 und 13 nicht abdichtend sind, d.h. das Fluid kann in axialer Richtung an den Abstandshaltern K3 und K4 vorbeiströmen. Die Abstandshalter K3 und K4 stellen somit für eine zwischen den Rohren 12 und 13 axial verlaufende Strömung lediglich eine Verengung, jedoch keine Abdichtung dar. Vorzugsweise sind auch die Abstandshalter K3 und K4 jeweils ein ringförmiges Gebilde, wie z.B. ein ringförmiger Kugelkäfig oder ein O-Ring aus einem Elastomermaterial. Der O-Ring kann einen kreisförmigen oder nichtkreisförmigen Querschnitt quer zur Umfangsrichtung des Rohres 12 haben. Insbesondere kann der O-Ring auch einen entlang der Umfangsrichtung des Rohres 12 veränderlichen Querschnitt mit vorzugsweise abwechselnd grösserer und kleinerer Querschnittsfläche haben. Dies ermöglicht eine Lagerung des Rohres 13 mit oder ohne radialem Spiel im Innern des Rohres 12 und insbesondere mit radialer Federung, wenn ein elastisch verformbarer Abstandshalter K3 oder K4 verwendet wird.

Insbesondere sind die Querschnittsflächen der Ringnuten R3 und R4 sowie der Abstandshalter K3 und K4 des zweiten Rohres 12 kleiner als die entsprechenden Querschnittsflächen der Ringnuten R1 und R2 sowie der Abstandshalter K1 und K2 des ersten Rohres 11. Darüberhinaus haben die Ringnuten R3 und R4 einen kleineren Radius als die Ringnuten R1 und R2, und die ringförmigen Abstandshalter-Gebilde K3 und K4 haben einen kleineren Radius als die ringförmigen Abstandshalter-Gebilde K1 und K2.

An der Aussenwand des zweiten Abschnitts 13b des dritten Rohres 13 ist eine äussere Ringnut R6 ausgebildet, die sich jeweils entlang der Umfangsrichtung des Rohres 13 erstreckt. In der Ringnut R6 ist ein Dichtungsring 17 angeordnet. Wenn das dritte Rohr 13 in dem zweiten Rohr 12 des Teleskoprohres 10 eingefahren ist, besteht zwischen dem Dichtungsring 17 und der Innenwand des zweiten Rohres 12 ein radiales Spiel. Auch hier bildet der Dichtungsring 17 keine Abdichtung für ein zwischen den Rohren 12 und 13 axial strömendes Fluid.

Durch diesen Aufbau der Rohre 12 und 13 ist zwischen den beiden Rohren 12 und 13 ein sich über die ganze axiale Länge der beiden Rohre 12 und 13 erstreckender Ringspalt gebildet, welcher einen Hohlraum H2 bildet, der durch einen Leckbereich 15 in zwei axiale Hohlraum-Teilabschnitte H2a und H2b unterteilt ist. Auch der Leckbereich 15 ist insbesondere ein ringförmiger Leckbereich zwischen den beiden Rohren 12 und 13 und kann durch den Dichtungsring 17 abgedichtet werden. Um diese Abdichtung zu erzielen, muss das Rohr 13 bezüglich des Rohrs 12 ausreichend weit und mit ausreichender Kraft axial verschoben werden, damit der Dichtungsring 17 in den Leckbereich 15 gelangt und diesen unter elastischer Verformung des Dichtungsrings 17 verschliesst. In diesem abgedichteten Zustand ist eine axiale Strömung eines Fluids von dem ersten Hohlraum-Teilabschnitt H2a zu dem zweiten Hohlraum-Teilabschnitt H2b oder umgekehrt nicht mehr möglich.

Die beiden ringförmigen Leckbereiche 14 und 15 sowie die mit ihnen zusammenwirkenden Dichtungsringe 16 bzw. 17 unterscheiden sich lediglich durch den Radius des ringförmigen Leckbereichs bzw. des Dichtungsrings. Der zweite Leckbereich 15 und der zweite Dichtungsring 17 haben einen kleineren Radius als der erste Leckbereich 14 und der erste Dichtungsring 16.

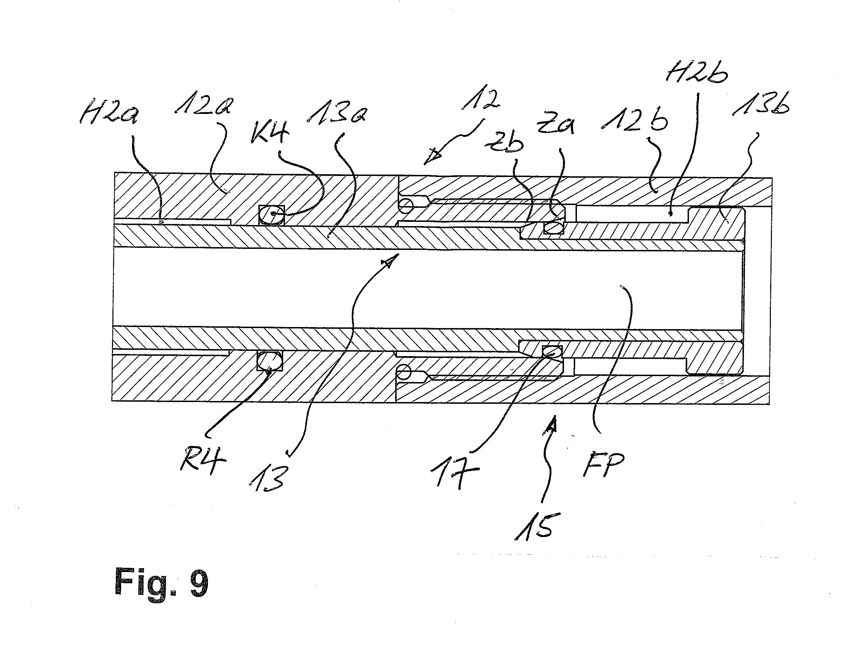

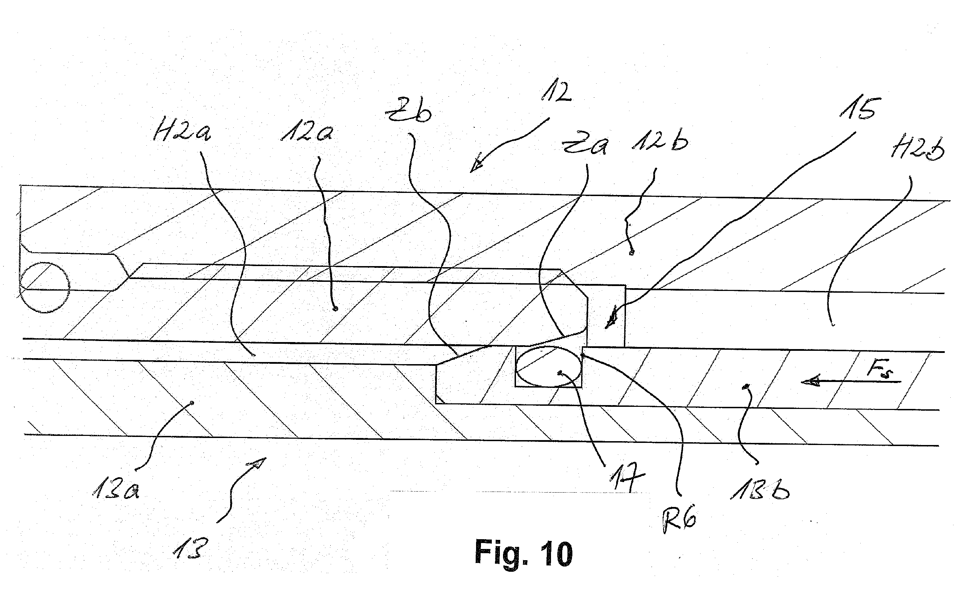

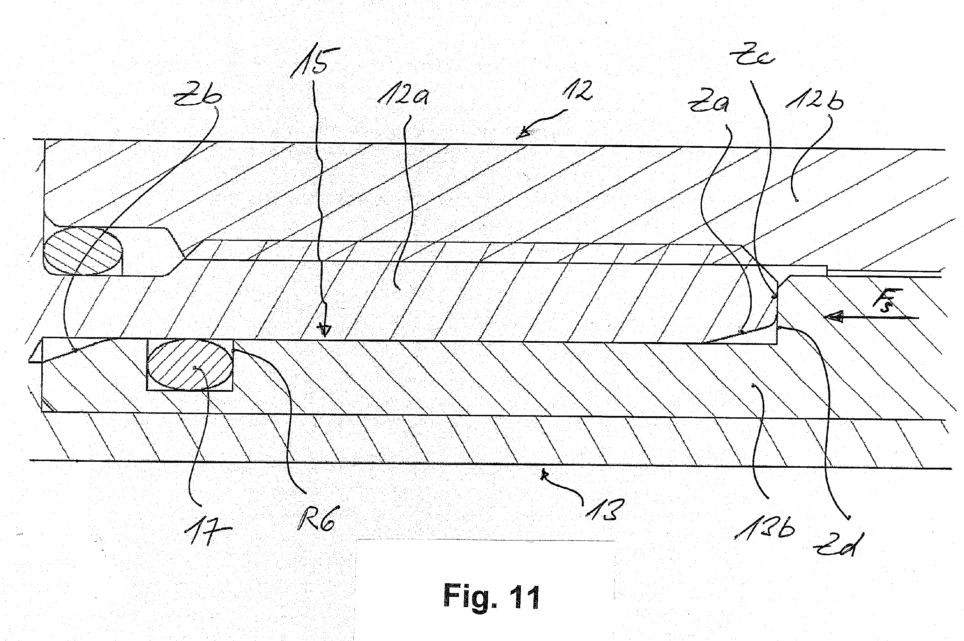

Es werden nun anhand von **Fig. 9** und **Fig. 10** der zweite Leckbereich 15 und der zweite Dichtungsring 17 sowie die Art ihres Zusammenwirkens noch ausführlicher beschrieben. Ausserdem sei an dieser Stelle bemerkt, dass der in Fig. 9 und in Fig. 10 dargestellte ausgefahrene Zustand nicht der vollständig ausgefahrene Zustand ist, sondern ein fast vollständig ausgefahrener Zustand, d.h. ein quasi ausgefahrener Zustand ist, bei dem jedoch der Leckbereich 14 durch den Dichtungsring 16 (in Fig. 9 und Fig. 10 nicht gezeigt) sowie der Leckbereich 15 durch den Dichtungsring 17 (in Fig. 9 und Fig. 10 gezeigt) schon abgedichtet sind. Bei diesem fast vollständig ausgefahrenen Zustand sind der Dichtungsring 16 und der Dichtungsring 17 jeweils schon komprimiert und wirken abdichtend. Bei einem vollständig ausgefahrenen Zustand sind der Dichtungsring 16 (in Fig. 11 nicht gezeigt) und der Dichtungsring 17 (in Fig. 11 gezeigt) ebenfalls komprimiert, doch befinden sich das ausgefahrene mittlere Rohr 12 mit dem äusseren Rohr 11 in Anschlag (in Fig. 11 nicht gezeigt) und das ausgefahrene innere Rohr 13 mit dem mittleren Rohr 12 in Anschlag (in Fig. 11 gezeigt).

**Fig. 9** ist eine stärker vergrösserte Darstellung eines Ausschnitts des Teilbereichs von Fig. 8 im ausgefahrenen Zustand 2 (siehe Fig. 6) der Vorrichtung. Der Ausschnitt zeigt unter anderem den zweiten Leckbereich 15 und den zweiten Dichtungsring 17 im abdichtenden Zustand sowie die Ringnut R4 und den in ihr angeordneten Abstandshalter K4. In diesem ausgefahrenen Zustand 2 sind die beiden axialen Hohlraum-Teilabschnitte H2a und H2b voneinander fluidmässig getrennt. Eine Fluidströmung ist nur entlang des Haupt-Fluidpfades FP möglich, nicht jedoch entlang des durch die beiden axialen Hohlraum-Teilabschnitte H2a und H2b zwischen den Rohren 12 und 13 gebildeten Neben-Fluidpfades H2. Ausserdem zeigt Fig. 9 (sowie Fig. 8) eine konische Zentrierschulter Za, die in dem abdichtbaren Leckbereich 15 an der Innenseite des Rohres 12 an dessen Abschnitt 12a angebracht ist, sowie eine dazu komplementäre konische Zentrierschulter Zb, die an der Aussenseite des Rohres 13 an dessen Abschnitt 13b angebracht ist.

Die anhand von Fig. 9 ermöglichte Beschreibung gilt analog auch für den ersten Leckbereich 14 und den ersten Dichtungsring 16 sowie die Art ihres Zusammenwirkens. Das bedeutet, dass in dem ausgefahrenen Zustand 2 die beiden axialen Hohlraum-Teilabschnitte H1a und H1b (siehe Fig. 8) voneinander fluidmässig getrennt sind. Eine Fluidströmung ist somit nur entlang des Haupt-Fluidpfades FP möglich, nicht jedoch entlang des durch die beiden axialen Hohlraum-Teilabschnitte H1a und H1b zwischen den Rohren 11 und 12 gebildeten Neben-Fluidpfades H1. Das bedeutet ausserdem, dass eine konische Zentrierschulter Za, die in dem abdichtbaren Leckbereich 14 an der Innenseite des Rohres 11 an dessen Abschnitt 11a angebracht ist, sowie eine dazu komplementäre konische Zentrierschulter Zb, die an der Aussenseite des Rohres 12 an dessen Abschnitt 12c angebracht ist, vorgesehen sind.

**Fig. 10** ist eine noch stärker vergrösserte Darstellung eines weiteren Ausschnitts des Teilbereichs von Fig. 8 im ausgefahrenen Zustand 2 (siehe Fig. 6) der Vorrichtung. Der Ausschnitt zeigt im wesentlichen wieder den zweiten Leckbereich 15 und den zweiten Dichtungsring 17 im abdichtenden Zustand 2. Der hier dargestellte abdichtende Zustand 2 des Leckbereichs 15 wird erreicht, indem das innere Rohr 13 bezüglich des mittleren Rohrs 12 mit einer axialen Schubkraft Fₛ axial verschoben wird, bis die konische Zentrierschulter Zb an der zu ihr komplementären konischen Zentrierschulter Za zunächst entlanggleitet und anschliessend an dieser vorbeigleitet, woraufhin der zunächst aus der Ringnut R6 herausragende Dichtungsring 17 an der sich verjüngenden konischen Zentrierschulter Za entlanggleitet und dabei zunehmend komprimiert wird. Wenn die durch das zunehmende Komprimieren des elastischen Dichtungsrings 17 erzeugte elastische Kraft sowie evtl. auftretende Haftreibungskräfte in dem Leckbereich 15 gross genug sind, gleichen deren axiale Komponenten die axiale Schubkraft Fₛ aus. Das innere Rohr 13 bleibt dann in dieser axialen Position bezüglich des mittleren Rohres 12 stehen, wobei der Dichtungsring 17 zwischen der Ringnut R6 und der konischen Zentrierschulter Za komprimiert ist und den ringförmigen Leckbereich 15 abdichtet.

Die anhand von Fig. 10 ermöglichte Beschreibung gilt analog auch für den ersten Leckbereich 14 und den ersten Dichtungsring 16 sowie die Art ihres Zusammenwirkens. Das bedeutet, dass der abdichtende Zustand 2 des Leckbereichs 14 erreicht wird, indem das mittlere Rohr 12 bezüglich des äusseren Rohrs 11 mit einer axialen Schubkraft F'ₛ axial verschoben wird, bis die konische Zentrierschulter Zb an der zu ihr komplementären konischen Zentrierschulter Za zunächst entlanggleitet und anschliessend an dieser vorbeigleitet, woraufhin der zunächst aus der Ringnut R5 herausragende Dichtungsring 16 an der sich verjüngenden konischen Zentrierschulter Za entlanggleitet und dabei zunehmend komprimiert wird. Wenn die durch das zunehmende Komprimieren des elastischen Dichtungsrings 16 erzeugte elastische Kraft sowie evtl. auftretende Haftreibungskräfte in dem Leckbereich 14 gross genug sind, gleichen deren axiale Komponenten die axiale Schubkraft F'ₛ aus. Das mittlere Rohr 12 bleibt dann in dieser axialen Position bezüglich des äusseren Rohres 11 stehen, wobei der Dichtungsring 16 zwischen der Ringnut R5 und der konischen Zentrierschulter Za komprimiert ist und den ringförmigen Leckbereich 14 abdichtet.

In Fig. 11 ist eine der Fig. 10 entsprechende noch stärker vergrösserte Darstellung eines Ausschnitts des Teilbereichs von Fig. 8 in einem vollständig ausgefahrenen Zustand der Vorrichtung BIR1 gezeigt. Der hier abgebildete Ausschnitt zeigt im wesentlichen wieder den zweiten Leckbereich 15 und den zweiten Dichtungsring 17 im komprimierten und somit abdichtenden Zustand 2. Der hier dargestellte abdichtende Zustand 2 des Leckbereichs 15 wird erreicht, indem das innere Rohr 13 bezüglich des mittleren Rohrs 12 noch weiter verschoben wird als in Fig. 10, bis eine Anschlagschulter Zd des inneren Rohrs 13 an einer zu ihr komplementären Anschlagschulter Zc des mittleren Rohrs 12 in Anschlag gelangt. Bei diesem vollständig ausgefahrenen Zustand wurden die durch das zunehmende Komprimieren des elastischen Dichtungsrings 17 erzeugte elastische Kraft sowie evtl. auftretende Haftreibungskräfte in dem Leckbereich 15 durch eine ausreichend grosse axiale Schubkraft Fₛ überwunden. Erst beim Erreichen der Anschlagstellung der beiden Anschlagschultern Zc und Zd bleibt das innere Rohr 13 dann in dieser vollständig ausgefahrenen axialen Position bezüglich des mittleren Rohres 12 stehen, wobei der Dichtungsring 17 zwischen der Ringnut R6 und der zylinderförmigen Wandfläche des Abschnitts 12a des mittleren Rohres 12 komprimiert ist und den ringförmigen Leckbereich 15 abdichtet.

Die anhand von Fig. 11 ermöglichte Beschreibung gilt analog auch für den ersten Leckbereich 14 und den ersten Dichtungsring 16 sowie die Art ihres Zusammenwirkens. Das bedeutet, dass der abdichtende Zustand 2 des Leckbereichs 14 erreicht wird, indem das mittlere Rohr 12 bezüglich des äusseren Rohrs 11 noch weiter verschoben wird als in Fig. 10, bis eine Anschlagschulter Zd des mittleren Rohrs 12 an einer zu ihr komplementären Anschlagschulter Zc des äusseren Rohrs 11 in Anschlag gelangt. Bei diesem vollständig ausgefahrenen Zustand wurden die durch das zunehmende Komprimieren des elastischen Dichtungsrings 16 erzeugte elastische Kraft sowie evtl. auftretende Haftreibungskräfte in dem Leckbereich 14 durch eine ausreichend grosse axiale Schubkraft Fₛ überwunden. Erst beim Erreichen der Anschlagstellung der beiden Anschlagschultern Zc und Zd bleibt das mittlere Rohr 12 dann in dieser vollständig ausgefahrenen axialen Position bezüglich des äusseren Rohres 11 stehen, wobei der Dichtungsring 16 zwischen der Ringnut R5 und der zylinderförmigen Wandfläche des Abschnitts 11a des äusseren Rohres 11 komprimiert ist und den ringförmigen Leckbereich 14 abdichtet.

Im folgenden wird nun die Funktionsweise, d.h. das Ausfahren und das Einfahren des Teleskoprohres 10, beschrieben.

Wenn vor dem Reinigen des Behälters durch Anschliessen einer Fluidquelle bzw. durch Öffnen eines Ventils dem Fluidpfad FP potentielle und kinetische Fluidenergie zugeführt wird, entsteht aufgrund des durch den Wassermotor M und den Düsenbereich D (siehe Fig. 7) gebildeten Fluidwiderstands im Innern des Teleskoprohrs 10 ein Staudruck, der dazu führt, dass einerseits das innerste Rohr 13 bezüglich des mittleren Rohrs 12 des Teleskoprohrs 10 ausgefahren wird und andererseits das mittlere Rohr 12 bezüglich des äussersten Rohrs 11 des Teleskoprohrs 10 ausgefahren wird. Während des Ausfahrens sind die Leckbereiche 14 und 15 zwischen den jeweiligen Rohren offen, so dass einerseits durch den Haupt-Fluidpfad FP Reinigungsfluid strömt oder sich dieser zumindest mit Reinigungsfluid füllt, während gleichzeitig durch die beiden Neben-Fluidpfade H1 und H2 zwischen den Rohrpaaren 11-12 bzw. 12-13 ein Teil des Reinigungsfluids strömt. Durch diese Fluidströmungen in den Neben-Fluidpfaden H1 und H2 erfolgt eine Schmierung und Spülung zwischen den einzelnen Rohren 11, 12, 13 des Teleskoprohres 10. Zusammen mit den Abstandshaltern K1 und K2 sowie K3 und K4 wird dadurch einer Kaltverschweissung zwischen den Rohrpaaren 11-12 und 12-13 vorgebeugt.

Sobald die Dichtungsringe 16 und 17 während des Ausfahrens der Rohrpaare 11-12 bzw. 12-13 in die Leckbereiche 14 bzw. 15 gelangen werden die Neben-Fluidpfade H1 und H2 blockiert und die Strömungen darin gestoppt. Nun strömt das gesamte Reinigungsfluid durch den Haupt-Fluidpfad FP, und die gesamte potentielle und kinetische Energie des Reinigungsfluids steht für den Antrieb des Wassermotors M und an den Düsenöffnungen des Düsenkopfs DK während der Reinigung der Behälter-Innenwände zur Verfügung.

Wenn nach dem Reinigen des Behälters durch Entfernen der Fluidquelle bzw. durch Schliessen eines Ventils dem Fluidpfad FP die potentielle und kinetische Fluidenergie der Fluidquelle entzogen wird, werden aufgrund der Schwerkraft im Innern des Teleskoprohrs 10 einerseits das innerste Rohr 13 bezüglich des mittleren Rohrs 12 des Teleskoprohrs 10 eingefahren und andererseits das mittlere Rohr 12 bezüglich des äussersten Rohrs 11 des Teleskoprohrs 10 eingefahren. Dabei sind die Leckbereiche 14 und 15 zwischen den jeweiligen Rohren wieder offen, so dass einerseits durch den Haupt-Fluidpfad FP Reinigungsfluid nach unten strömt, während gleichzeitig durch die beiden Neben-Fluidpfade H1 und H2 zwischen den Rohrpaaren 11-12 bzw. 12-13 ein Teil des Reinigungsfluids ausströmt. Aufgrund des durch den Wassermotor M, den Düsenbereich D (siehe Fig. 7) und die Leckbereiche 14 und 15 gebildeten Fluidwiderstands wirkt das im Teleskoprohr 10 verbleibende und aus diesem ausströmende Reinigungsfluid als Fluidbremse, so dass die beiden Rohre 13 und 12 sanft in ihre eingefahrene Stellung zurückkehren.

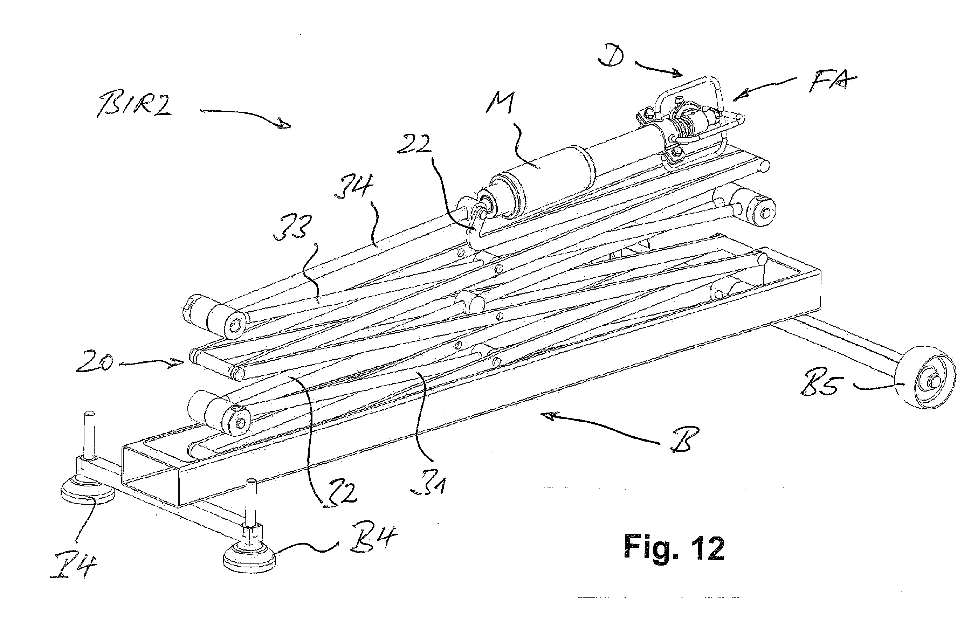

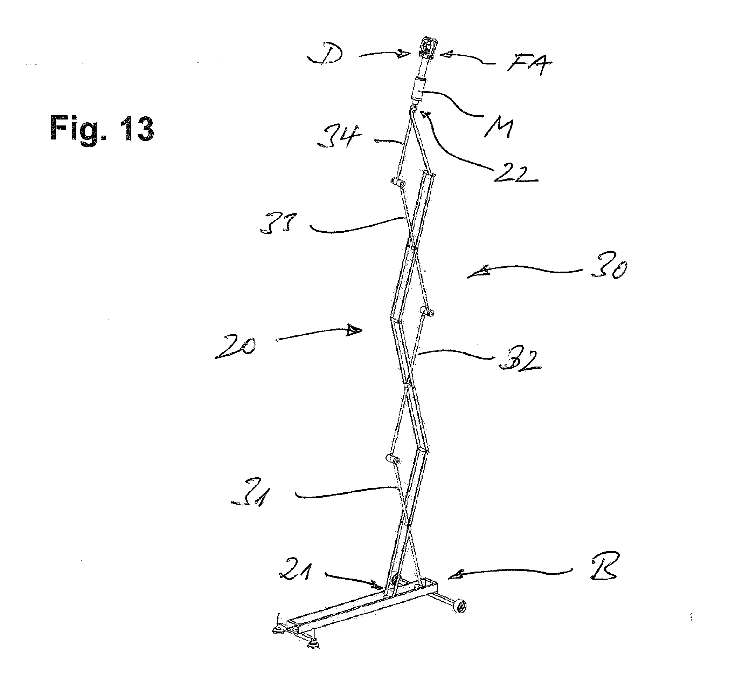

In **Fig. 12** ist als Perspektivansicht ein zweites Ausführungsbeispiel der erfindungsgemässen Vorrichtung BIR2 im eingefahrenen Zustand gezeigt, während in **Fig. 13** in derselben Perspektivansicht die Vorrichtung BIR2 im ausgefahrenen Zustand gezeigt ist. Bei der Vorrichtung BIR2 ist ein Teilbereich des Fluidpfades FP durch eine Serienschaltung 30 aus aneinander fluiddicht angelenkten Rohren 31, 32, 33, 34 gebildet. Zwischen der Basis B und dem einen Düsenbereich D aufweisenden Fluidauslass FA ist ein Gestänge 20 in Form eines Parallelogramm- bzw. Scherengestänge angeordnet, dessen unteres Ende 21 an der Basis B befestigt ist und an dessen oberem Ende 22 der Düsenbereich D und der Wassermotor M angeordnet sind. Dem Gestänge 20 ist ein Hydraulikantrieb (nicht gezeigt) zugeordnet, der mit einer Fluidquelle (nicht gezeigt) direkt oder über eine Abzweigung des Fluidpfades FP mit der Fluidquelle indirekt in Fluidverbindung steht. Anstelle der Serienschaltung 30 aus aneinander angelenkten Rohren kann auch ein Schlauch (nicht gezeigt) vorgesehen werden. Der zum Einfahren und Ausfahren des Gestänges 20 vorgesehene Hydraulikantrieb kann denselben oder ein ähnlichen Aufbau haben wie das durch ein Reinigungsfluid durchströmbare Teleskoprohr 10 (siehe Fig. 7, 8, 9, 10). Anstelle des Hydraulikantriebs kann auch ein Spindelantrieb verwendet werden.

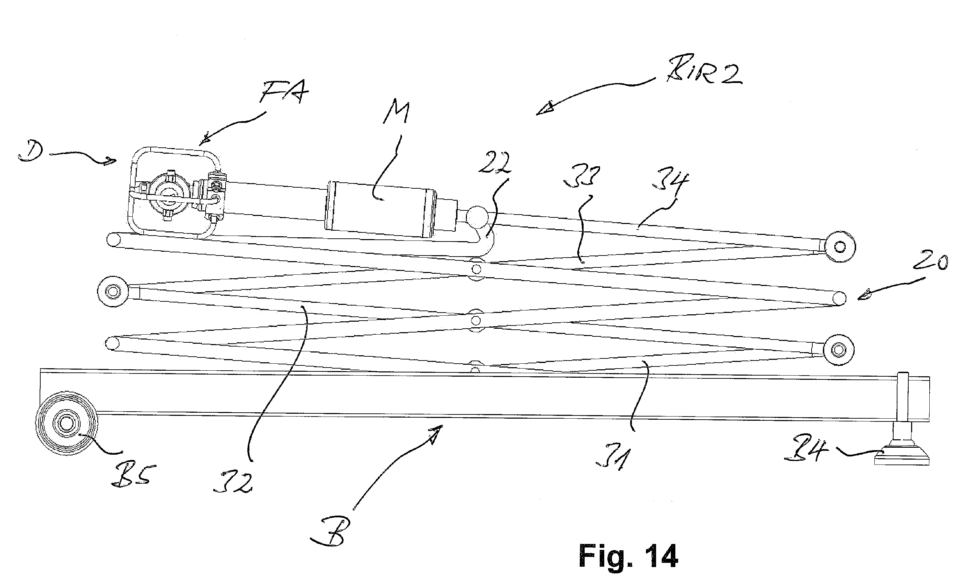

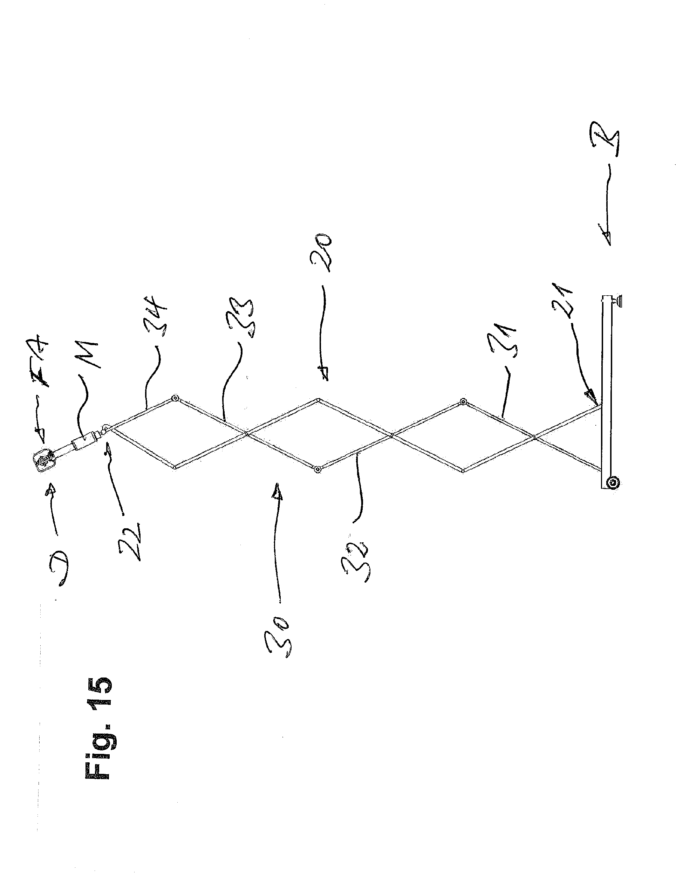

In **Fig. 14** ist eine Seitenansicht des zweiten Ausführungsbeispiels der Vorrichtung BIR2 im eingefahrenen Zustand gezeigt, während in **Fig. 15** in derselben Seitenansicht die Vorrichtung BIR2 im ausgefahrenen Zustand gezeigt ist.

## Patentansprüche

1. Vorrichtung (BIR1, BIR2) zur Reinigung innenliegender Flächen von Behältern, insbesondere von Fässern oder Tanks mit unten angebrachter Zugangsöffnung, mittels eines in Form mindestens eines Fluidstrahls auf die innenliegenden Flächen auftreffenden Fluids, wobei die Vorrichtung eine Basis (B) zum stabilen Aufstellen der Vorrichtung im Innern des Behälters und eine an der Basis (B) befestigte mehrteilige Fluidpfad-Anordnung (FPA) aufweist, welche bezüglich der Basis (B) verstellbar ist und einen Fluidpfad (FP) aufweist, welcher sich von einem Fluideinlass (FE) der Vorrichtung zu einem einen Düsenbereich (D) aufweisenden Fluidauslass (FA) der Vorrichtung erstreckt, und wobei an den Fluideinlass (FE) eine Fluiddruck, d.h. potentielle Energie, und Fluiddurchsatz, d.h. kinetische Energie, bereitstellende Fluidquelle anschliessbar ist,
**dadurch gekennzeichnet, dass**
die Fluidpfad-Anordnung (FPA) von einem eingefahrenen Zustand (1), in welchem sich der Fluidauslass (FA) in einer unteren Stellung nahe bei der Basis (B) befindet, zu einem ausgefahrenen Zustand (2), in welchem sich der Fluidauslass (FA) in einer oberen Stellung weiter entfernt von der Basis (B) befindet, durch Ausfahren bzw. Einfahren verstellbar ist.

2. Vorrichtung nach Anspruch 1, **dadurch gekennzeichnet, dass** die mehrteilige (11, 12, 13) Fluidpfad-Anordnung (FPA) mittels der potentiellen und/oder kinetischen Energie der Fluidquelle gegen die Schwerkraft von Teilen (12, 13) der Fluidpfad-Anordnung (FPA) ausfahrbar ist und mittels der Schwerkraft von Teilen (12, 13) der Fluidpfad-Anordnung (FPA) einfahrbar ist.

3. Vorrichtung nach Anspruch 1 oder 2, **dadurch gekennzeichnet**, der Düsenbereich (D) durch einen mindestens ein Düsenloch, vorzugsweise eine Vielzahl Düsenlöcher, aufweisenden Düsenkopf bzw. Sprühkopf (DK) gebildet ist, welcher am fluidauslass-seitigen Ende des Fluidpfads (FP) drehbar gelagert ist und welcher durch die potentielle und/oder kinetische Energie des aus der anschliessbaren Fluidquelle stammenden Fluids drehangetrieben ist.

4. Vorrichtung nach einem der Ansprüche 1 bis 3, **dadurch gekennzeichnet, dass** die an den Fluideinlass (FE) anschliessbare Fluidquelle das einzige aktive Antriebselement der Vorrichtung ist, welches die Energie für das Ausfahren der Fluidpfad-Anordnung (FPA) sowie für den Betrieb des drehangetrieben Düsenkopfes bzw. Sprühkopfes (DK) liefert.

5. Vorrichtung (BIR1) nach einem der Ansprüche 1 bis 4, **dadurch gekennzeichnet, dass** ein Teilbereich des Fluidpfades (FP) längenverstellbar im Innern eines Hydraulikantrieb-Teleskoprohres (10) mit mindestens zwei Rohren (11, 12, 13) gebildet ist, wobei das untere Ende des Teleskoprohres (10) bzw. des untersten Rohres (11) an der Basis (B) angebracht ist und am oberen Ende des Teleskoprohres (10) bzw. des obersten Rohres (13) der Düsenbereich (D) angebracht ist.

6. Vorrichtung nach Anspruch 5, **dadurch gekennzeichnet, dass** das Teleskoprohr (10) mit dem in ihm gebildeten längenverstellbaren Teilbereich bezüglich der Basis (B), vorzugsweise zwischen einer im wesentlichen horizontalen Stellung und einer im wesentlichen vertikalen Stellung, um eine Achse (A1) verschwenkbar ist.

7. Vorrichtung (BIR2) nach einem der Ansprüche 1 bis 4, **dadurch gekennzeichnet, dass** zumindest ein Teilbereich des Fluidpfades (FP), vorzugsweise der gesamte Fluidpfad (FP), durch eine Serienschaltung (30) aus aneinander fluiddicht angelenkten Rohren (31, 32, 33, 34) oder durch einen Schlauch gebildet ist, dass zwischen der Basis (B) und dem einen Düsenbereich (D) aufweisenden Fluidauslass (FA) ein Gestänge (20), vorzugsweise ein Parallelogramm- bzw. Scherengestänge, angeordnet ist, dessen unteres Ende (21) an der Basis (B) befestigt ist und an dessen oberem Ende (22) der Düsenbereich (D) befestigt ist, und dass das Gestänge (20) einen Hydraulikantrieb aufweist, der mit der Fluidquelle direkt oder über eine Abzweigung des Fluidpfades (FP) mit der Fluidquelle indirekt in Fluidverbindung steht.

8. Vorrichtung nach einem der Ansprüche 5 bis 7, **dadurch gekennzeichnet, dass** die aneinander axial verschiebbaren Rohre (11, 12, 13) des Hydraulikantrieb-Teleskoprohres (10) bzw. des Hydraulikantriebs mit radialem Spiel aneinander gelagert sind und an dem durch das Spiel gebildeten jeweiligen Hohlraum (H1, H2) zwischen benachbarten Rohren (11, 12 bzw. 12, 13) jeweils ein Leckbereich (14, 15) vorhanden ist, der durch ein jeweiliges Dichtungsmittel (16, 17) verschliessbar ist, wenn die beiden benachbarten Rohre (11, 12 bzw. 12, 13) ihre maximale axiale Relativverschiebung erreicht haben.

9. Vorrichtung nach einem der Ansprüche 3 bis 8, **dadurch gekennzeichnet, dass** der Düsenkopf bzw. Sprühkopf (DK) ein Teil eines mechanischen Antriebsstranges (M) ist, welcher einen Abschnitt zum Umwandeln von Strömungsenergie des Fluids in Drehenergie des Antriebsstranges und somit in Drehenergie des Düsenkopfes (DK) aufweist.

10. Vorrichtung nach einem der Ansprüche 1 bis 9, **dadurch gekennzeichnet, dass** beweglich gelagerte Teile, insbesondere drehbar oder verschiebbar gelagerte Teile der Vorrichtung zwischen dem jeweiligen Teil und dem jeweiligen Lager ein Spiel aufweisen und dass in dem das Spiel bildenden Spalt das aus der angeschlossenen Fluidquelle stammende Fluid als Fluidschmierung wirkt.
